Europäisches Patentamt

European Patent Office

Office européen des brevets

(11) Veröffentlichungsnummer: **0 046 969**

A2

## (12) EUROPÄISCHE PATENTANMELDUNG

(21) Anmeldenummer: 81106579.6

(22) Anmeldetag: 25.08.81

(51) Int. Cl.³: **B 62 D 7/06**
**B 60 K 17/30**

(30) Priorität: 02.09.80 US 183536

(43) Veröffentlichungstag der Anmeldung:
10.03.82 Patentblatt 82/10

(84) Benannte Vertragsstaaten:
AT DE FR GB IT SE

(71) Anmelder: DEERE & COMPANY

Moline Illinois 61265(US)

(72) Erfinder: Orlandea, Nicolae Viorel
4150 E. 60th St.
Davenport Iowa 52807(US)

(72) Erfinder: Wiley, Jack Cleveland
3732 - 40th St. Court
Moline Illinois 61265(US)

(74) Vertreter: Gramm, Werner, Prof. Dipl.-Ing. et al,
Patentanwälte Gramm + Lins Theodor-Heuss-Strasse 2
D-3300 Braunschweig(DE)

(54) Lenkung für ein Fahrzeug.

(57) Die Erfindung betrifft ein verbessertes Lenkungs- und Radaufhängungssystem für geländegängige Fahrzeuge. Das System umfaßt ein an jedem angetriebenen Rad (12) vorgesehenes Getriebe (20), das aus drei Zahnrädern besteht: Einem Eingangszahnrad (22), einem Zwischenzahnrad (24) und einem Ausgangszahnrad (26). Das Eingangszahnrad (22) sitzt auf einer angetriebenen Ausgangswelle (16), die aus dem Differential des Fahrzeugs ragt. Das Ausgangszahnrad (26) sitzt auf einer sich nach außen erstreckenden Antriebswelle (28), die in einem Getriebegehäuse (30) gelagert ist, das das gesamte Getriebe (20) umschließt. An diesem Getriebegehäuse (30) ist eine hülsenförmige Nabe (34) drehbar befestigt, an der ein Gabelgelenk (38) verschwenkbar festgelegt ist. Dieses Gabelgelenk (38) trägt die Radachse (18), auf der das Antriebsrad (12) montiert ist. In dem von der Nabe (34) und dem Gabelgelenk (38) umschlossenen Raum sind zwei Paar miteinander kämmender Kegelzahnräder (44-47) angeordnet, die die Antriebswelle (28) mit der Radachse (18) verbinden und so die Übertragung eines Drehmomentes von dem Motor des Fahrzeuges auf die angetriebenen Räder ermöglichen. Das System unfaßt ferner zwei verschwenkbar miteinander verbundene Arme (40, 41), die eine Verbindung zwischen der Nabe (34) und dem Rahmen (11) des Fahrzeuges (10) herstellen. Diese beiden Arme (40, 41) wirken zusammen mit Verstellern (66) und Aufhängungen (86, 88), um die Schwenkachse (Y) des Gabelgelenkes (38) in aufrechter Lage festzuhalten.

FIG. 3

- 1 -

"Lenkung für ein Fahrzeug"


Die Erfindung betrifft eine Lenkung für ein Fahrzeug mit zumindest zwei angetriebenen Rädern, die auf Radachsen sitzen. Insbesondere handelt es sich um eine Lenkung für schwere geländegängige Fahrzeuge.

Für geländegängige Fahrzeuge wie z.B. landwirtschaftliche und industrielle Traktoren wurden verschiedene Lenkungs- und Radaufhängungssysteme entwickelt. Zur Zeit werden bei schweren geländegängigen Fahrzeugen im wesentlichen drei Systeme verwendet. Das erste System verwendet einen einzigen starren Rahmen mit einer starren und einer lenkbaren Radachse. Mit der lenkbaren Radachse verbunden ist ein Lenkungsmechanismus zum Lenken der Räder. Das zweite System verwendet ebenfalls einen einzigen starren Rahmen jedoch mit zwei starren Radachsen. Die Räder sind in diesem Fall schwenkbar an den Enden jeder starren Radachse angeordnet und sind so steuerbar. Die Lenkbewegung wird ermöglicht durch Verwendung eines Universalgelenkes o.dgl. an jedem Rad. Abgesehen davon, daß derartige Gelenke sehr teuer sind, ermöglichen sie nur einen begrenzten Einschlagwinkel. Bei dem dritten System handelt es sich um eine Knicklenkung, bei der zwei voneinander unabhängige Rahmen gegenseitig verschwenkbar

- 2 -

aneinander gelenkt sind. Am Vorderrahmen ist eine Radachse montiert, die in vertikaler Richtung verschwenkbar, üblicherweise
aber nicht lenkbar ist. Der hintere Rahmen weist eine nicht
lenkbare starre Radachse auf. Die Lenkbewegung wird durch Verschwenkung der beiden Rahmen gegeneinander um den Anlenkpunkt
erreicht.

Alle vorstehend beschriebenen Systeme weisen Nachteile·auf, die
durch die vorliegende Erfindung behoben werden. Bei dem ersten
Starrahmen-System führen Vibration und Belastungsschwankungen
zu Antriebsproblemen, wenn das Fahrzeug unebenes Gelände durchfährt. Bei dem zweiten genannten System ergibt sich der begrenzte Einschlagwinkel an jedem Rad aus den dort vorgesehenen Gelenken; außerdem ergeben sich bei den verschiedenen Bauteilen Probleme hinsichtlich einer Überlastung, wenn das Fahrzeug über
Buckel und Rinnen fährt. Bei dem Knicklenkungssystem besteht immer die Gefahr, daß eines der Räder vom Boden abhebt, wenn das
Fahrzeug über unebenes Gelände fährt. Dies führt zu ruckartigen
Bewegungen, wobei unterschiedliche Drehmomentkräfte auf den Antrieb wirken, wenn das abgehobene Rad wieder den Boden berührt.

Der Erfindung liegt die Aufgabe zugrunde, eine insbesondere für
geländegängige Fahrzeuge geeignete Lenkung zu entwickeln, bei
der die vorstehend genannten·Probleme nicht auftauchen. So sollen die auf den Antrieb des Fahrzeugs wirkenden Drehmomentkräfte
verringert werden, wenn das Fahrzeug über rauhes Gelände fährt.
Gleichzeitig soll dabei die im Fahrzeug auftretende Vibration
verringert werden. Dabei soll bei der neuen Lenkung auf die
teueren und anfälligen Universalgelenke in der kinematischen
Übertragung verzichtet werden.

Diese Aufgabe wird gemäß der Erfindung durch folgende Merkmale gelöst:

a) Aus dem Fahrzeug ragen Antriebswellen, die jeweils mit einer der Radachsen fluchten;

b) auf jeder Antriebswelle sitzt konzentrisch und beweglich ein erster Träger, auf dem ein zweiter Träger um eine Lenkungsachse verschwenkbar gelagert ist, die senkrecht auf der Radachse steht, die mit dem zweiten Träger verbunden ist;

c) jede Radachse ist mit je einer Antriebswelle über zwei Paar miteinander kämmende Zahnräder verbunden, von denen die Zahnräder des einen Paares auf den Enden der genannten Radachse sowie der Antriebswelle sitzen, während die beiden Zahnräder des anderen Paares im ersten Träger gelagert sind und um die Lenkungsachse rotieren.

Die US-PS 4 209 072 offenbart ein Fahrzeug mit einem Rahmen, einem Motor, zumindest zwei angetriebenen Rädern und einem Getriebe, das an den Motor angeschlossen und mit jedem der Antriebsräder über eine Ausgangswelle verbunden ist, die jeweils in das eine Ende eines Getriebegehäuses geführt ist und hier ein Eingangszahnrad trägt, das über ein Zwischenzahnrad mit einem Ausgangszahnrad in Drehverbindung steht, das auf der Antriebswelle sitzt, die aus dem anderen Ende des Getriebegehäuses herausgeführt ist. Bei einem derartigen Fahrzeug kann die erfindungsgemäße Lenkung zweckmäßig durch folgende Merkmale gekennzeichnet sein:

a) An dem zweiten Ende des Getriebegehäuses ist der erste Träger beweglich festgelegt;

- 4 -

b) die Lenkungsachse wird bezogen auf den Rahmen in der festgelegten Richtung durch ein Gestänge gehalten, das einen ersten und zweiten Arm aufweist, wobei sich der erste Arm von dem ersten Träger erstreckt und der zweite Arm mit seinem einen Ende am ersten Arm und mit seinem anderen Ende am Rahmen angelenkt ist;

c) jeder zweite Träger ist mit dem Rahmen über einen Versteller beweglich verbunden, um den zweiten Träger um die Lenkungsachse zu verschwenken und dadurch eine Winkelverstellung der Antriebsräder gegenüber dem Rahmen zu erreichen.

Üblicherweise ist für jedes angetriebene Rad des Fahrzeugs eine der genannten Ausgangswellen vorgesehen.

Eine spezielle konstruktive Lösung der Erfindung kann vorzugsweise durch folgende Merkmale gekennzeichnet sein:

a) Das Getriebegehäuse weist einen nach außen ragenden Ringbund auf, der die Antriebswelle konzentrisch umgreift;

b) der erste Träger ist als Nabe ausgebildet, sitzt drehbar auf dem genannten Ringbund sowie auf der Antriebswelle und weist ein Paar äußere, sich gegenüberliegende und miteinander fluchtende zylindrische Knaggen auf, die die senkrecht auf der Längsachse der Antriebswelle stehende Lenkungsachse definieren;

c) der zweite Träger ist als Gabelgelenk ausgebildet und umschließt mit einem zylindrischen Buchsenteil die zugeordnete Radachse, während seine beiden sich winkelförmig von dem Buchsenteil erstreckenden Arme mit jeweils einer Ausnehmung die genannten Knaggen übergreifen, so daß das Gabelgelenk gegenüber der Nabe um die Lenkungsachse verschwenkbar ist;

- 5 -

d) der an der Nabe sitzende erste Arm des genannten Gestänges
   verläuft senkrecht zur Antriebswelle und bildet mit dem zweiten Arm zwei benachbarte Seiten eines Parallelogrammes, dessen anderen beiden Seiten von einer Mittelachse des genannten
   Getriebes und einer parallel zum ersten Arm durch den Mittelpunkt der genannten Ausgangswelle verlaufenden Achse gebildet werden;

e) zwischen jedem Paar miteinander fluchtender Antriebsräder ist
   ein am Rahmen angelenkter Schwenkbalken angeordnet, dessen
   Enden über Aufhängungen mit dem genannten Getriebegehäuse verbunden sind;

f) zwischen diesen beiden miteinander fluchtenden Getriebegehäusen ist eine Stabilisiereinrichtung angeordnet, um die
   Stellung der beiden benachbarten Antriebsräder gegenüber dem
   Rahmen auszugleichen.

Die genannte Parallelogrammanordnung ermöglicht es, ein Antriebsmoment von der Maschine des Fahrzeugs auf die angetriebenen Räder zu übertragen, so daß das Fahrzeug auf ein angehängtes Gerät
eine Zugkraft ausüben und die Lenkungsachse in einer aufrechten
Lage halten kann.

Weitere Merkmale und Vorteile der Erfindung werden anhand eines
Ausführungsbeispieles erläutert.

In der Zeichnung ist eine als Beispiel dienende Ausführungsform
der Erfindung dargestellt. Es zeigen:

Figur 1    einen Traktor in Seitenansicht;

Figur 2    in vergrößertem Maßstab ein in Figur 1 dargestelltes Getriebe in Seitenansicht und teilweise im
           Schnitt;

- 6 -

Figur 3    in vergrößertem Maßstab einen Schnitt gemäß der
           Linie 3 - 3 in Figur 1;

Figur 4    eine Ansicht gemäß der Linie 4 - 4 in Figur 3;

Figur 5    in perspektivischer Darstellung ein Gabelgelenk;

Figur 6    in Draufsicht die Vorderhälfte des in Figur 1
           dargestellten Traktors, wobei der Traktorrahmen
           nur angedeutet ist, um die unteren Bauteile darzustellen;

Figur 7    den linken Teil der Darstellung in Figur 6 in
           vergrößertem Maßstab, wobei das Rad in verschiedenen Winkelstellungen dargestellt ist, und

Figur 8    die Darstellung gemäß Figur 1 in Frontansicht.

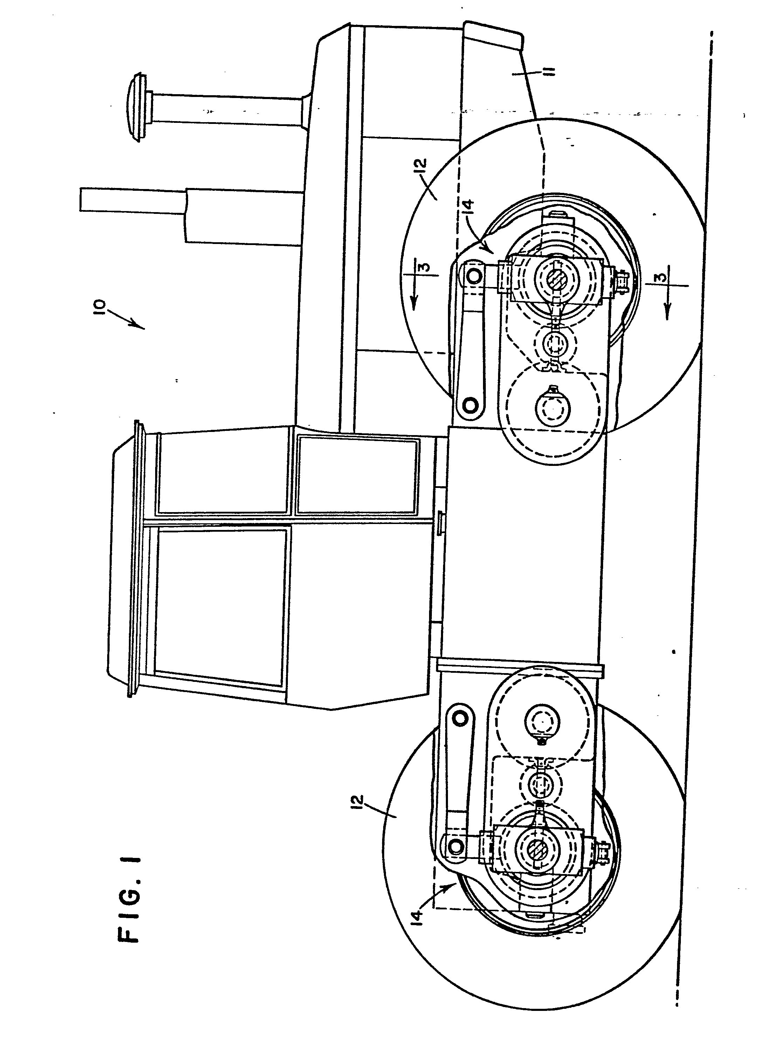

Figur 1 zeigt einen Traktor 10 mit Vierradantrieb und einem
starren Rahmen 11. Der Antrieb wird von dem Motor des Traktors 10
über ein nicht dargestelltes Differential auf die angetriebenen
Räder 12 übertragen. Mit jedem dieser angetriebenen Räder 12 ist
ein Lenkungs- und Aufhängungssystem 14 verbunden, das sowohl für
einen Zweirad- als auch für einen Vierrad-Antrieb geeignet ist.

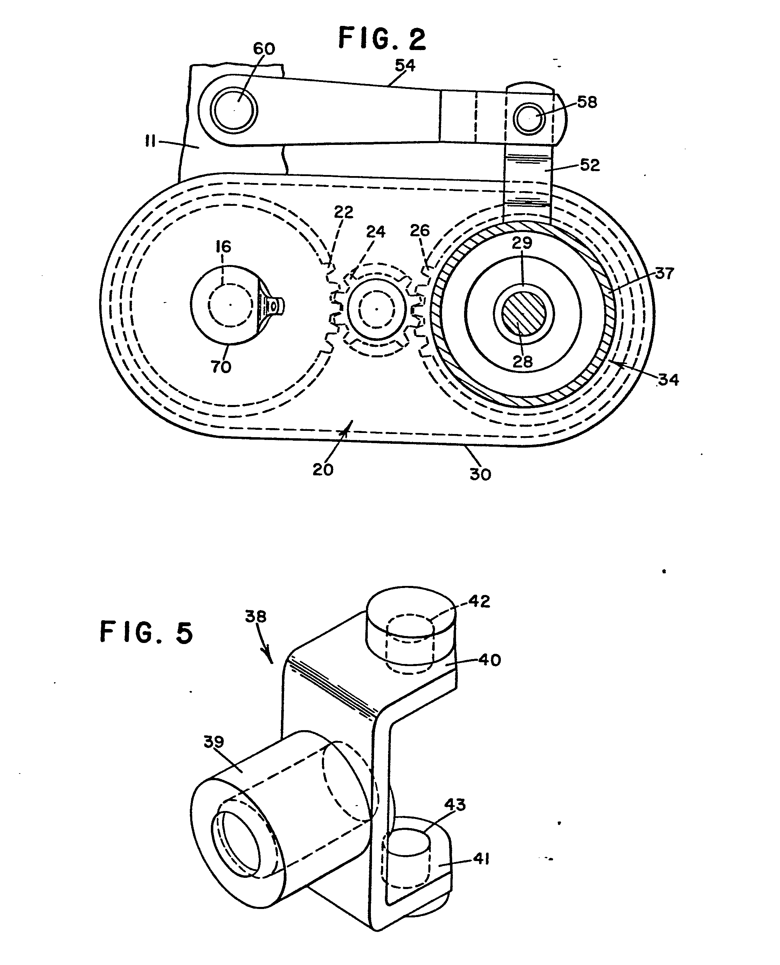

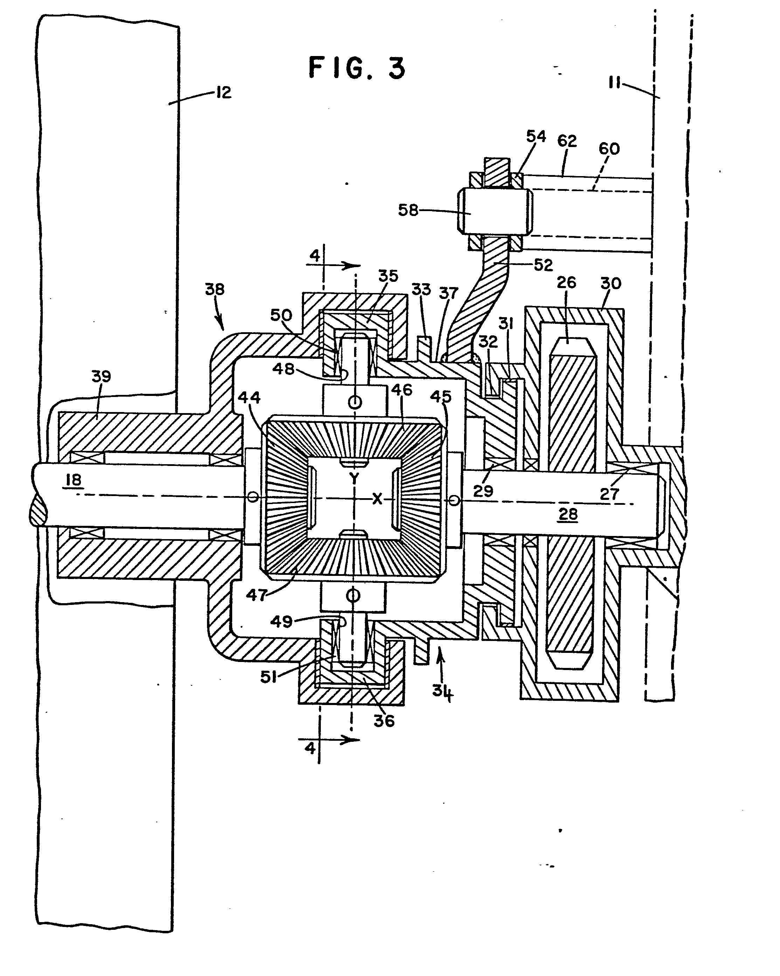

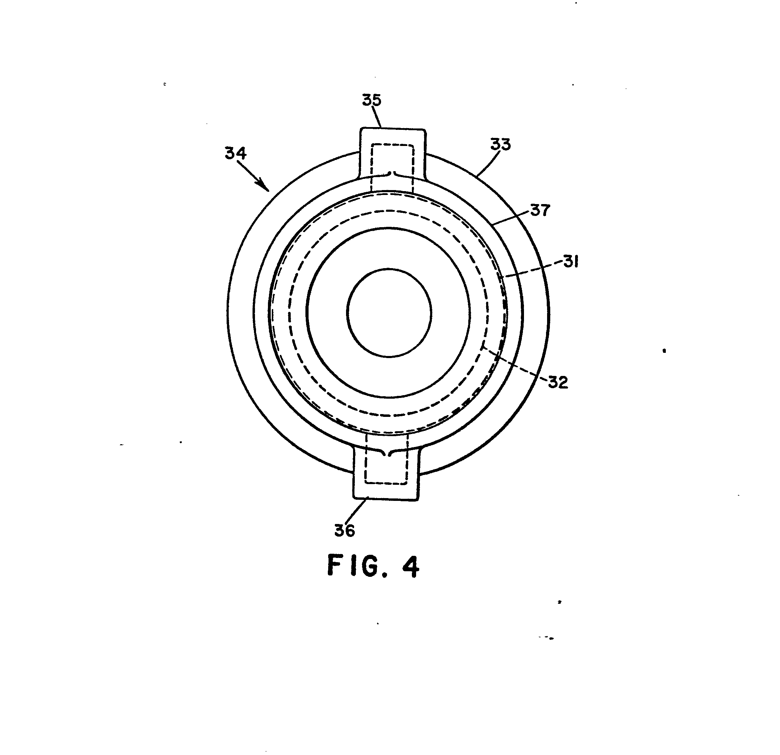

Gemäß den Figuren 2 und 3 ist das Lenkungs- und Aufhängungssystem 14 mit einer angetriebenen Ausgangswelle 16 verbunden, die
aus dem Differential des Traktors 10 ragt. Jedes angetriebene
Rad 12 steht mit einer derartigen Ausgangswelle 16 in Verbindung.
Zwischen der Ausgangswelle 16 sowie einer jeweils mit einem Antriebsrad 12 verbundenen Radachse 18 ist ein Getriebe 20 angeordnet, das aus drei miteinander kämmenden Zahnrädern besteht nämlich einem Eingangszahnrad 22, einem Zwischenzahnrad 24 und einem Ausgangszahnrad 26. Das Eingangszahnrad 22 sitzt auf der Ausgangswelle 16, während das Ausgangszahnrad 26 auf einer sich
nach außen erstreckenden Antriebswelle 28 sitzt. Das Eingangszahnrad 22 hat zweckmäßigerweise die gleiche Größe wie das Ausgangszahnrad 26. Die Antriebswelle 28 ist über Lager 27 drehbar
in einem Getriebegehäuse 30 gelagert, das verschwenkbar an der
Ausgangswelle 16 festgelegt ist, das Getriebe 20 umschließt und
einen Ringbund 32 aufweist. Letzterer ist konzentrisch zu der
Antriebswelle 28 angeordnet und bildet eine Lagerung für eine
hülsenförmige Nabe 34. Diese Nabe 34 ist über Lager 29,31 einerseits auf der Antriebswelle 28 und andererseits an dem Ringbund 32 gelagert und weist, wie insbesondere Figur 4 erkennen
läßt, ein Paar äußere, sich gegenüberliegende und miteinander
fluchtende zylindrische Knaggen 35,36 auf, die auf einer äußeren
Mantelfläche 37 angeordnet sind. Die Achse dieser beiden Knaggen 35,36 steht vorzugsweise senkrecht auf der Radachse 18.

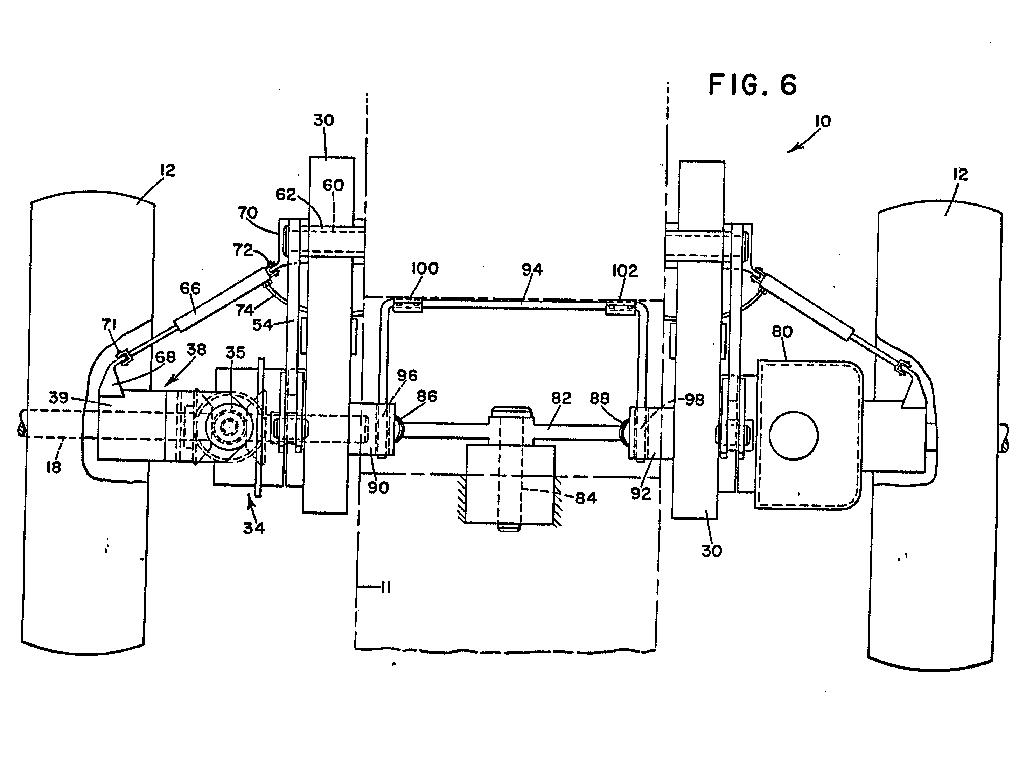

Auf der äußeren Mantelfläche 37 der Nabe 34 ist ein Bund 33 vorgesehen, der als Halterung für eine in Figur 6 dargestellte
Staubabdeckung 80 dient. Diese kann aus jedem flexiblen Material
hergestellt sein wie z.B. aus natürlichem oder synthetischem
Gummi und kann eine an sich beliebige Form aufweisen. Vorzugsweise ist die Staubabdeckung 80 mit einer glatten Oberfläche
versehen und besteht aus dehnbarem gummiähnlichen Material.

Zur Verbindung der Radachse 18 mit der hülsenförmigen Nabe 34
dient ein Gabelgelenk 38, das am besten in Figur 5 dargestellt
ist. Dieses Gabelgelenk 38 umfaßt einen hohlzylindrischen
Buchsenteil 39 und zwei sich nach außen erstreckende Arme 40,41.
Der hohlzylindrische Buchsenteil 39 dient der Radachse 18 als
Drehlagerung, während die beiden Arme 40,41 mit Ausnehmungen 42,
43 die beiden Knaggen 35,36 der Nabe 34 übergreifen. Aufgrund
dieser Verbindung kann das Gabelgelenk 38 gegenüber der Nabe 34
um die Achse der beiden zylindrischen Knaggen 35,36 verschwenkt
werden. Diese Verschwenkbewegung bildet den einen Freiheitsgrad, nämlich die Lenkung des Antriebsrades 12. Durch die lenkbare Verbindung des Gabelgelenkes 38 an der Nabe 34 kann daher der Fahrer den Traktor 10 wenden.

In dem von dem Gabelgelenk 38 und der Nabe 34 eingeschlossenen Raum sind zwei Paar miteinander kämmende Kegelräder 44-47 angeordnet, die alle gleiche Größe aufweisen können, jedoch sind die Kegelräder 44 und 45 zweckmäßig kleiner als die Kegelräder 46,47, denn dadurch kann das angetriebene Rad 12 mit seiner Radachse 18 relativ gegenüber der Antriebswelle 28 über einen größeren Winkel verschwenkt werden. Sind die Zahnräder 46,47 wesentlich größer als die Zahnräder 44,45, und läßt die Ausbildung der verschiedenen Bauteile dies zu, so könnte das Antriebsrad 12 aus seiner Mittelstellung um $\pm$ 90° verschwenkt werden, wobei mit Mittelstellung eine angenähert parallele Lage des Rades zu der Längsachse des Traktors 10 gemeint ist.

Die Zahnräder 44,45 liegen parallel zueinander und fluchten miteinander, wobei das Zahnrad 44 am Ende der Radachse 18 und das Zahnrad 45 am Ende der Antriebswelle 28 sitzen. Die beiden Zahnräder 46,47 liegen jeweils senkrecht zu den anderen beiden Zahnrädern und rotieren um die durch die beiden zylindrischen Knaggen 35,36 gebildete Achse; sie sind auf Nebenwellen 48,49 montiert, die drehbar gelagert sind an den Innenflächen 50,51 der beiden zylindrischen Knaggen 35,36.

Über die vier Zahnräder 44-47 wird die Drehbewegung von der Antriebswelle 28 auf die Radachse 18 übertragen. Diese Drehbewegung bildet den zweiten Freiheitsgrad für das angetriebene Rad 12, das sowohl um die durch Radachse 18 und Antriebswelle 28 gebildete X-Achse rotiere, als auch gegenüber der durch die beiden zylindrischen Knaggen 35,36 gebildeten Y-Achse schwenken kann. Diese beiden Freiheitsgrade werden für jedes angetriebene Rad 12 erreicht ohne Verwendung irgendeines Universalgelenkes o.dgl..

Gemäß Figur 2 umfaßt das Lenkungs- und Aufhängungssystem 14 für jedes Antriebsrad 12 ein aus einem ersten und zweiten Arm 52,54 bestehendes Gestänge. Der erste Arm 52 ist mit seinem einen Ende an der äußeren Mantelfläche der Nabe 34 befestigt und erstreckt sich senkrecht zur Antriebswelle 28. Das andere Ende des ersten Armes 52 ist über einen Stift 58 verschwenkbar mit dem einen Ende des zweiten Armes 54 verbunden, dessen anderes Ende über eine Achse 60 an dem Rahmen 11 angelenkt ist. Auf die Achse 60 ist eine Buchse 62 geschoben (siehe Figur 3), die den zweiten Arm 54 im Abstand von dem Rahmen 11 hält. Anstelle der Buchse 62 könnten auch andere Abstandsmittel wie z.B. Federringe o.dgl. verwendet werden.

Die gelenkige Verbindung der beiden Arme 52,54 ermöglicht ihnen, sich mit der oszillierenden Nabe 34 zu bewegen. Beim Fahren des Traktors 10 verhindert der erste Arm 52 eine Drehung der Nabe 34, so daß ein Drehmoment von der Antriebsmaschine des Traktors auf die Antriebsräder 12 übertragen werden kann. Außerdem hält der zweite Arm 54 die Lenkungsachse, die durch die Mitten der Zahnräder 46,47 verläuft immer in lotrechter Stellung.

Gemäß Figur 6 ist zwischen dem Antriebsrad 12 und dem Rahmen 11 ein ausschieb- und einziehbarer Versteller 66 angeordnet, der mechanisch oder hydraulisch betätigt werden kann. Er ist mit seinem einen Ende durch eine Verbindung 68 an und mit seinem anderen Ende über eine Verbindung 70 am Getriebegehäuse 30 befestigt und zwar fluchtend mit der Ausgangswelle 16 (siehe Fig.2). Der Versteller 66 ist an den Verbindungen 68,70 über Befestigungen 71,72 lösbar verbunden. Eine an den Versteller 66 angeschlossene Leitung 74 dient als Zuführleitung für ein Arbeitsmedium, z.B. Hydrauliköl von und zu einem nicht dargestellten, auf dem Rahmen 11 montierten Vorratsbehälter.

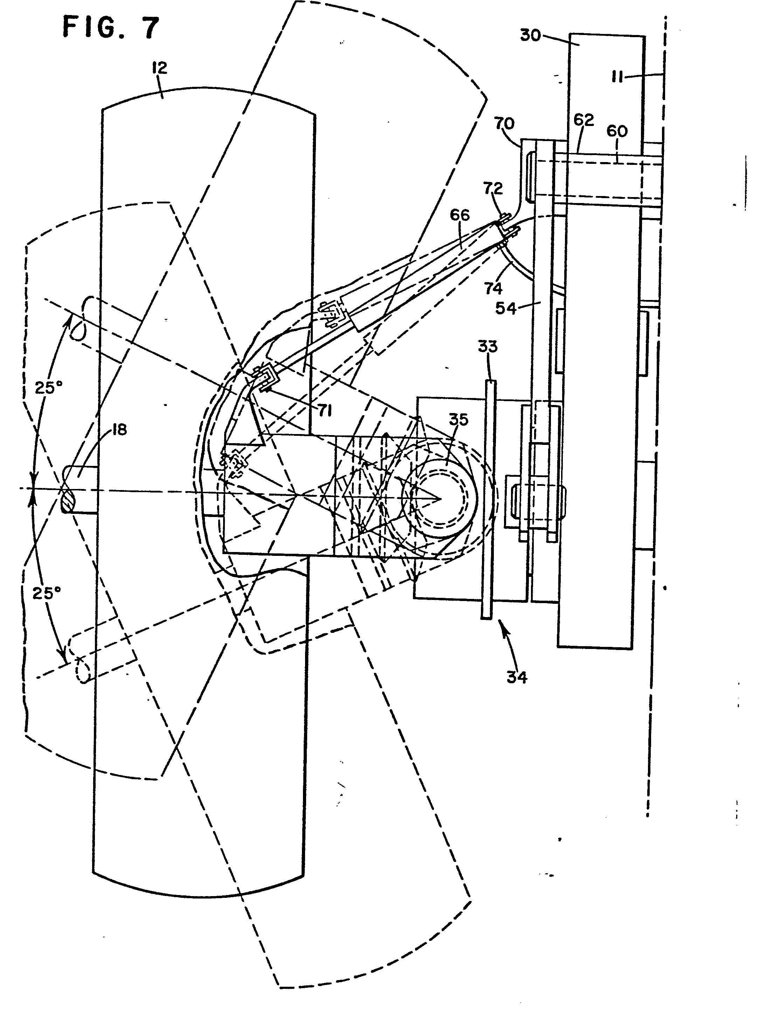

Figur 7 zeigt in vergrößertem Maßstab das Antriebsrad 12 in drei Stellungen, nämlich in Mittelstellung, in der das Antriebsrad 12 parallel zum Rahmen 11 liegt und in zwei anderen Stellungen, in denen das Rad 12 um ± 25° aus der Mittelstellung verschwenkt ist. Das Lenkungs- und Aufhängungssystem 14 gemäß dieser Erfindung kann das Antriebsrad 12 um etwa ± 90° aus seiner Mittelstellung verschwenken unter der Voraussetzung, daß zwischen Rahmen 11 und Antriebsrad 12 keine anderen Bauteile hindernd entgegenstehen. Die einzige Lenkbegrenzung ergibt sich aus der Berührung des Zahnrades 44 mit dem Zahnrad 45, da beim Verschwenken des Antriebsrades 12 das Zahnrad 44 auf den beiden Kegelrädern 46,47 abrollt und sich dem Zahnrad 45 nähert. Eine Berührung zwischen den Zahnrädern 44,45 sollte zur Vermeidung von Beschädigungen vermieden werden.

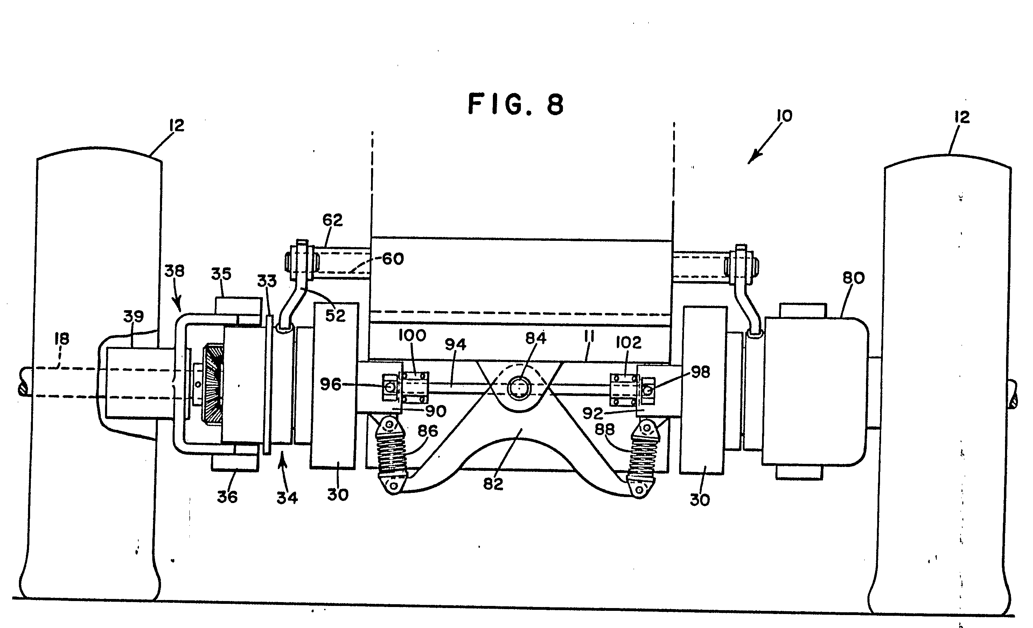

Die Aufhängung des Systems 14 umfaßt gemäß Figur 8 einen zwischen jedem Paar miteinander fluchtender Antriebsräder 12 angeordneten Schwenkbalken 82, der vorzugsweise bogenförmig ausgebildet ist und etwa in seinem Mittelpunkt an der Unterseite des Rahmens 11 durch einen Stift 84 angelenkt ist. Die beiden Enden des Schwenkbalkens 82 sind mit Aufhängungen 86,88 verbunden, die Federn, Stoßdämpfer o.dgl. sein können und ihrerseits an inneren Widerlagern 90,92 der Getriebegehäuse 30 befestigt sind. Durch den Schwenkbalken 82 sollen die Unterschiede in der Vertikalbewegung jedes Antriebsrades 12 gegenüber dem Traktor 10 ausgeglichen werden.

Die Aufhängung umfaßt ferner eine Stabilisierstange 94, die zwischen jedem Paar miteinander fluchtender Antriebsräder 12 angeordnet ist, aus massivem Rundmaterial besteht und vorzugsweise U-förmig gebogen ist. Die beiden Enden der Stabilisierstange 94 sind in Öffnungen 96,98 der Widerlager 90,92 festgelegt, während der U-Steg der Stabilisierstange 94 am Rahmen 11 drehbar gehalten ist über Schellen 100,102. Beim Fahren des

- 11 -

Traktors über unebenen Boden bewegen sich die Antriebsräder 12
auf und ab entsprechend der überfahrenen Bodenkontur, und die
Stabilisierstange 94 wird die Stellung der beiden benachbarten
Antriebsräder 12 gegenüber dem Rahmen 11 ausgleichen.

Es wird darauf hingewiesen, daß der Schwenkbalken 82 sowie die
Stabilisierstange 94 nur zwischen zwei koaxial miteinander fluchtenden Antriebsrädern 12 erforderlich sind, so daß bei einem
Zweiradantrieb diese Bauteile nur jeweils einfach vorgesehen
werden müssen.

Ein weiterer durch die erfindungsgemäße Konstruktion erzielter
Vorteil liegt in der Möglichkeit, von der Antriebsmaschine auf
jedes Rad ein höheres Drehmoment übertragen zu können, da kleinere
Drehmomentspitzen zurück in die Antriebseinrichtung übermittelt
werden.

Aus vorstehender Beschreibung ergeben sich für einen Durchschnittsfachmann zahlreiche Alternativen, Abwandlungen und Verbesserungen, die noch unter den Schutzumfang dieser Anmeldung fallen
sollen.

Gr/Gru.

Patentansprüche:

1. Lenkung für ein Fahrzeug (10) mit zumindest zwei angetriebenen Rädern (12), die auf Radachsen (18) sitzen, gekennzeichnet durch folgende Merkmale:

a) Aus dem Fahrzeug (10) ragen Antriebswellen (28), die jeweils mit einer der Radachsen (18) fluchten;

b) auf jeder Antriebswelle (28) sitzt konzentrisch und beweglich ein erster Träger (34), auf dem ein zweiter Träger (38) um eine Lenkungsachse (Y) verschwenkbar gelagert ist, die senkrecht auf der Radachse (18) steht, die mit dem zweiten Träger (38) verbunden ist;

c) jede Radachse (18) ist mit je einer Antriebswelle (28) über zwei Paar miteinander kämmende Zahnräder (44-47) verbunden, von denen die Zahnräder (44,45) des einen Paares auf den Enden der genannten Radachse (18) sowie der Antriebswelle (28) sitzen, während die beiden Zahnräder (46,47) des anderen Paares im ersten Träger (34) gelagert sind und um die Lenkungsachse (Y) rotieren.

2. Lenkung nach Anspruch 1 für ein Fahrzeug (10) mit einem Rahmen (11), einem Motor, zumindest zwei angetriebenen Rädern (12) und einem Getriebe, das an den Motor angeschlossen ist und mit jedem der Antriebsräder (12) über je eine Ausgangswelle (16) verbunden ist, die jeweils in das eine Ende eines Getriebegehäuses (30) geführt ist und hier ein Eingangszahnrad (22) trägt, das über ein Zwischenzahnrad (24) mit einem Ausgangszahnrad (26) in Drehverbindung steht, das auf der Antriebswelle (28) sitzt, die aus dem anderen Ende des Getriebegehäuses (30) herausgeführt ist, g e k e n n - z e i c h n e t durch folgende Merkmale:

a) An dem zweiten Ende des Getriebegehäuses (30) ist der erste Träger (34) beweglich festgelegt;

b) die Lenkungsachse (Y) wird bezogen auf den Rahmen (11) in der festgelegten Richtung durch ein Gestänge gehalten, das einen ersten und zweiten Arm (52,54) aufweist, wobei sich der erste Arm (52) von dem ersten Träger (34) erstreckt und der zweite Arm (54) mit seinem einen Ende am ersten Arm (52) und mit seinem anderen Ende am Rahmen (11) angelenkt ist;

c) jeder zweite Träger (38) ist mit dem Rahmen (11) über einen Versteller (66) beweglich verbunden, um den zweiten Träger (38) um die Lenkungsachse (Y) zu verschwenken und dadurch eine Winkelverstellung der Antriebsräder (12) gegenüber dem Rahmen (11) zu erreichen.

3. Lenkung nach Anspruch 1 oder 2, gekennzeichnet durch folgende Merkmale:

a) Das Getriebegehäuse (30) weist einen nach außen ragenden Ringbund (32) auf, der die Antriebswelle (28) konzentrisch umgreift;

b) der erste Träger (34) ist als Nabe ausgebildet, sitzt drehbar auf dem genannten Ringbund (32) sowie auf der Antriebswelle (28) und weist ein Paar äußere, sich gegenüberliegende und miteinander fluchtende zylindrische Knaggen (35, 36) auf, die die senkrecht auf der Längsachse der Antriebswelle (28) stehende Lenkungsachse (Y) definieren;

c) der zweite Träger (38) ist als Gabelgelenk ausgebildet und umschließt mit einem zylindrischen Buchsenteil (39) die zugeordnete Radachse (18), während seine beiden sich winkelförmig von dem Buchsenteil erstreckenden Arme (40,41) mit jeweils einer Ausnehmung (42,43) die genannten Knaggen (35,36) übergreifen, so daß das Gabelgelenk (38) gegenüber der Nabe (34) um die Lenkungsachse (Y) verschwenkbar ist;

d) der an der Nabe (34) sitzende erste Arm (52) des genannten Gestänges (52,54) verläuft senkrecht zur Antriebswelle (28) und bildet mit dem zweiten Arm (54) zwei benachbarte Seiten eines Parallelogrammes, dessen anderen beiden Seiten von einer Mittelachse des von dem Getriebegehäuse (30) umschlossenen Getriebe (20) und einer parallel zum ersten Arm (52) durch den Mittelpunkt der genannten Ausgangswelle (16) verlaufenden Achse gebildet werden;

e) zwischen jedem Paar miteinander fluchtender Antriebsräder (12) ist ein'am Rahmen (11) angelenkter Schwenkbalken (82) angeordnet, dessen Enden über Aufhängungen (86, 88) mit dem genannten Getriebegehäuse (30) verbunden sind;

f) zwischen diesen beiden miteinander fluchtenden Getriebegehäusen (30) ist eine Stabilisiereinrichtung (94) angeordnet, um die Stellung der beiden benachbarten Antriebsräder (12) gegenüber dem Rahmen (11) auszugleichen.

4. Lenkung nach Anspruch 2 oder 3, dadurch gekennzeichnet, daß
in dem genannten Getriebe (20) das Eingangszahnrad (22) die
gleiche Größe aufweist wie das Ausgangszahnrad (26).

5. Lenkung nach Anspruch 2, 3 oder 4, dadurch gekennzeichnet,
daß das Zwischenzahnrad (24) kleiner ist als das Eingangszahnrad (22).

6. Lenkung nach einem der vorhergehenden Ansprüche, dadurch gekennzeichnet, daß die Zahnräder (44-47) der beiden miteinander kämmenden Zahnradpaare alle gleiche Größe aufweisen.

7. Lenkung nach einem der Ansprüche 1 bis 5, dadurch gekennzeichnet, daß die beiden Zwischenzahnräder (46,47) größer
sind als die beiden anderen Zahnräder (44,45).

8. Lenkung nach einem der vorhergehenden Ansprüche, dadurch gekennzeichnet, daß die beiden miteinander kämmenden Zahnradpaare (44-47) Kegelräder sind.

9. Lenkung nach einem der Ansprüche 3 bis 8, dadurch gekennzeichnet, daß über jedem Gabelgelenk (38) eine Staubabdeckung (80) vorgesehen ist.

10. Lenkung nach Anspruch 9, dadurch gekennzeichnet, daß die
Staubabdeckung (80) flexibel ist.

- 5 -

11. Lenkung nach Anspruch 9 oder 10, dadurch gekennzeichnet, daß die Staubabdeckung (80) eine glatte Außenfläche aufweist.

12. Lenkung nach einem der Ansprüche 2 bis 11, dadurch gekennzeichnet, daß die beiden Arme (52,54) des genannten Gestänges über einen Stift (58) verschwenkbar miteinander verbunden sind.

13. Lenkung nach einem der Ansprüche 2 bis 12, dadurch gekennzeichnet, daß der Versteller (66) ausschieb- und einziehbar ist.

14. Lenkung nach einem der Ansprüche 2 bis 13, dadurch gekennzeichnet, daß der Versteller (66) hydraulisch betätigbar ist.

15. Lenkung nach einem der Ansprüche 3 bis 14, dadurch gekennzeichnet, daß die Aufhängungen (86,88) Federn sind.

16. Lenkung nach einem der Ansprüche 3 bis 15, dadurch gekennzeichnet, daß der Schwenkbalken (82) bogenförmig ausgebildet ist.

17. Lenkung nach einem der Ansprüche 3 bis 16, dadurch gekennzeichnet, daß der Schwenkbalken (82) über einen Stift (84) am Rahmen (11) festgelegt ist.

18. Lenkung nach einem der Ansprüche 3 bis 17, dadurch gekennzeichnet, daß die den ersten Träger bildende Nabe (34) hülsenförmig ausgebildet ist und sich von der Antriebswelle (28) nach außen erstreckt.

Patentanwälte
G r a m m  +  L i n s
Gr/Gru.

FIG. 1

10

12

14

12

14

3

3

11

1/7

0046969

## FIG. 2

## FIG. 5

# FIG. 3

FIG. 4

FIG. 6

FIG. 7

# FIG. 8